# EUROPÄISCHE PATENTANMELDUNG

(11) **EP 0 529 549 A2**
(43) Veröffentlichungstag der Anmeldung: **03.03.1993**
(21) Anmeldenummer: 92114360.8
(22) Anmeldetag: 22.08.1992
(51) Int. Cl.: H01M 10/39

(54) **Elektrochemische Speicherzelle**

(30) Priorität: 29.08.1991 DE 4128719
(71) Anmelder: ABB PATENT GmbH, D-68309 Mannheim (DE)
(72) Erfinder: Flory, Wilfried, Dr., W-6835 Brühl (DE); Kaehler, Paul Gerhard, W-6900 Heidelberg (DE); Mennicke, Stefan, Dr., W-6906 Leimen-Gauangelloch (DE)
(74) Vertreter: Rupprecht, Klaus, Dipl.-Ing.

(57) **Zusammenfassung**

Die Erfindung bezieht sich auf eine elektrochemische Speicherzelle (1) auf der Basis von Natrium und Schwefel. Von Nachteil bei den bekannten Speicherzellen dieser Art ist die Tatsache, daß sie zu Batterien zusammengebaut, bei Ausfällen einzelner Speicherzellen größere Kapazitätsverluste der Batterie hervorrufen. Diese Nachteile werden dadurch vermieden, daß das Mengenverhältnis von Schwefel zu Natrium in Abhängigkeit von der Nennkapazität der Speicherzelle (1) so festgelegt ist, daß die Spannung am Ende der Nennentladung einen vorgegebenen Wert und das bei der Entladung gebildete Natriumpolysulfid eine definierte Zusammensetzung aufweisen.

## Beschreibung

Die Erfindung bezieht sich auf eine elektrochemische Speicherzelle gemäß dem Oberbegriff des Patentanspruches 1.

Solche elektrochemischen Speicherzellen eignen sich sehr gut als Energiequellen. Sie finden in vermehrtem Maße ihre Anwendung beim Aufbau von Hochenergiebatterien, die zur Stromversorgung von Elektrofahrzeugen vorgesehen sind.

Ein Beispiel für diese Speicherzellen sind solche auf der Basis von Natrium und Schwefel, die wiederaufladbar sind, und einen Festelektrolyten aus Beta-Aluminiumoxid besitzen, der den Anodenraum vom Kathodenraum trennt. Als Vorteil dieser Speicherzellen ist hervorzuheben, daß beim Aufladen derselben keine elektrochemischen Nebenreaktionen ablaufen. Die Kapazität von Natrium/Schwefel-Speicherzellen ist abhängig von der Größe des Festelektrolyten. Da diese nicht beliebig groß ausgebildet werden können, werden zur Erzielung einer definierten Kapazität in Reihe geschaltete Speicherzellen zusätzlich miteinander parallel verschaltet. Temperaturschwankungen in der Speicherzelle bzw. extreme Belastungen der Keramik können zu deren Bruch führen. Hierdurch kommt es zum Ausfall der jeweiligen Speicherzelle. Da einzelne Speicherzellen nach dem Ausfall rasch hochohmig werden, ist es erforderlich Querverschaltungen vorzusehen, die nach dem Ausfall der Speicherzelle den Kapazitätsverlust eines ganzen Stranges verhindern. Die verbleibenden intakten Speicherzellen müssen dann den gesamten Batteriestrom tragen. Damit der Ausfall einer Speicherzelle nicht sofort den Verlust der gesamten Kapazität eines Stranges zur Folge hat, müssen die intakten Stränge auch bis zu einem gewissen Grad tief entladbar sein, um den Kapazitätsverlust wenigstens teilweise auszugleichen. Wird jedoch zu tief entladen, kommt es zu einer Verarmung von Natrium im Bereich des Festelektrolyten, was den Ausfall weiterer Speicherzellen mit sich bringt. Bei bekannten Einrichtungen dieser Art werden zur Vermeidung dieses Problems die Gruppen von Speicherzellen zwischen zwei Querverschaltungen überwacht. Zusätzlich wird eine Tiefentladung der Hochenergiebatterie verhindert. Dieses Verfahren führt dazu, daß in der Praxis die Energiedichte, die aufgrund des Aufbaus der Speicherzellen zu erwarten ist, in der Batterie nicht realisiert werden kann. Ursache hierfür ist nicht zuletzt die Auslegung der Speicherzellen. Diese werden, da die erreichbare Energiedichte am größten ist, wenn so weit entladen wird, daß das sich bei der Entladung bildende Natriumpolysulfid die Zusammensetzung Na₂S_{2.7} aufweist, auf diese Entladungstiefe ausgelegt. Der Zuwachs an Energiedichte bei einer Entladung über Na₂S₄ hinaus, ist nur sehr gering. Die Nutzung des gesamten Einphasengebiets der Natriumpolysulfidschmelze bringt zudem einige erhebliche Nachteile mit sich. Diese bestehen in der verstärkten Korrosion der Bauteile, der abfallenden Spannung der Batterie, des sich erhöhenden Widerstandes der Batterie, der Erhöhung der Reaktionsentropie, so daß insgesamt ein Anstieg der Verlustleistung bewirkt wird.

Der Erfindung liegt deshalb die Aufgabe zugrunde, eine elektrochemische Speicherzelle aufzuzeigen, mit der eine Hochenergiebatterie aufgebaut werden kann, bei der die Nachteile des Standes des Technik ausgeschlossen sind.

Diese Aufgabe wird erfindungsgemäß durch die Merkmale des Patentanspruches 1 gelöst.

Erfindungsgemäß wird das Mengenverhältnis von Schwefel zu Natrium so ausgelegt, daß die Ruhespannung bei Nennentladung 1.85 bis 2.02 V beträgt. Durch die erfindungsgemäße Ausbildung der Speicherzelle wird erreicht, daß das sich bei der Entladung bildende Natriumpolysulfid am Ende der Nennentladung eine Zusammensetzung aufweist, die den Bereich zwischen Na₂S_{4.5} als auch Na₂S_{3.5} umfaßt und die Grenzwerte einschließt. Das Mengenverhältnis von Schwefel zu Natrium wird so festgelegt, daß die Molzahl von Schwefel zu Natrium größer als 3 : 2 ist. Erfindungsgemäß umfaßt die Menge des Natriums einen Tiefentladungsvorrat, der größer/gleich 15% und kleiner/gleich 30% ist. Zusätzlich ist eine Zweitreserve von etwa 5% vorgesehen, die bei ungünstigen Toleranzlagen immer noch eine Benetzung des Festelektrolyten mit Natrium in ausreichender Menge sichergestellt. Weitere erfindungswesentliche Merkmale sind in den Unteransprüchen gekennzeichnet.

Die Erfindung wird nachfolgend anhand von Zeichnungen näher erläuert.

Es zeigen:
- Fig. 1: eine erfindungsgemäße elektrochemische Speicherzelle,
- Fig. 2: die Wärmeentwicklung der erfindungsgemäßen Speicherzelle in Abhängigkeit vom Ladezustand.
- Fig.3: die Energiedichte als Funktion der Entladetiefe.

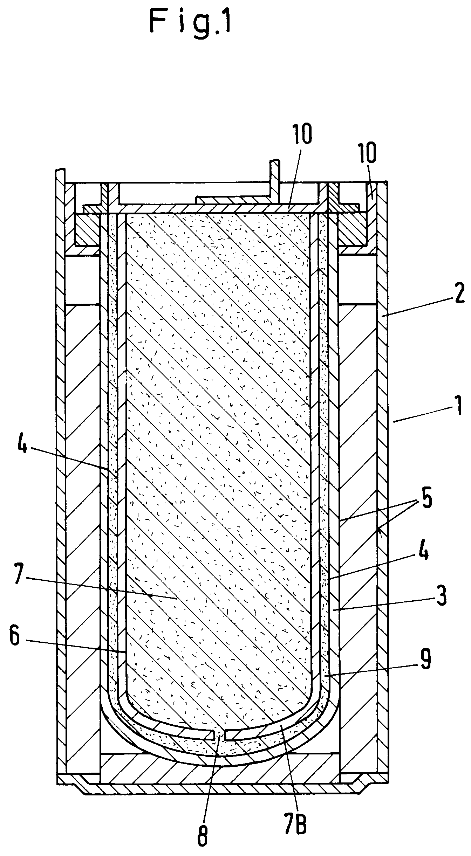

Die in Fig. 1 dargestellte elektrochemische Speicherzelle 1 wird nach außen hin durch ein becherförmiges Gehäuse 2 aus einem korrosionsbeständigen Metall begrenzt. Innerhalb des Gehäuses 2 ist ein ebenfalls becherförmiger Festelektrolyt 3 angeordnet, der aus einem ionenleitenden Material, vorzugsweise Beta-Aluminiumoxid gefertigt ist. Der Innenbereich des Festelektrolyten 3 wird als Anodenraum 4 genutzt. Die Abmessungen des Festelektrolyten 3 sind so bemessen, daß zwischen den Innenflächen des Gehäuses 2 und den Außenflächen des Festelektrolyten 3 ein zusammenhängender Zwischenraum 5 gebildet wird, der als Kathodenraum dient. Der Festelektrolyt 3 enthält in seinem Inneren einen Sicherheitseinsatz 6, der mit Natrium 7 gefüllt ist. Der Sicherheitseinsatz 6 weist an seinem dem geschlossenen Ende des Festelektrolyten 3 zugewandten Boden 7B eine Öffnung 8 auf, über welche Natrium in den Sicherheitsspalt 9 fließen kann. Dieser Sicherheitsspalt 9 befindet sich zwischen der Außenfläche des Sicherheitseinsatzes 7 und der Innenfläche des Festelektrolyten 3. Die Speicherzelle 1 weist einen Verschluß 10 auf, der sie nach außen hin abdichtet und gleichzeitig die beiden Reaktandenräume gegeneinander abgrenzt. Die in Fig. 1 dargestellte Speicherzelle 1 ist so ausgelegt, daß sie eine Nennkapazität von 53.6 Ah aufweist. Dafür sind 46g Natrium erfoderlich. Ferner ist eine Tiefentladungsreserve an Natrium von größer/gleich 15% und kleiner/gleich 30% vorgesehen. Hierfür ist ein Natriumgehalt an 53g erforderlich. Die zusätzliche Menge an Natrium, die erforderlich ist, um das Totvolumen der Na-Elektrode bei ungünstiger Toleranzlage zu füllen, beträgt etwa 5g. Diese Natriumelektrode wird mit einer Schwefelelektrode kombiniert, die 128g Schwefel enthält. Die Daten der Schwefelelktrode, die sich so bei der Entladung der Speicherzelle ergeben, sind nachfolgend dargestellt:

| Ladung | Zusammensetzg. | Ruhspanng. | Volumen |
|---|---|---|---|
| Nennentladung | Na₂S₄ | 1,93V | 90,0cm³ |
| Tiefentladung | Na₂S_{3,5} | 1,87V | 95,3cm³ |
| Vollentladung | Na₂S_{3,2} | 1,83V | 98,4cm³ |

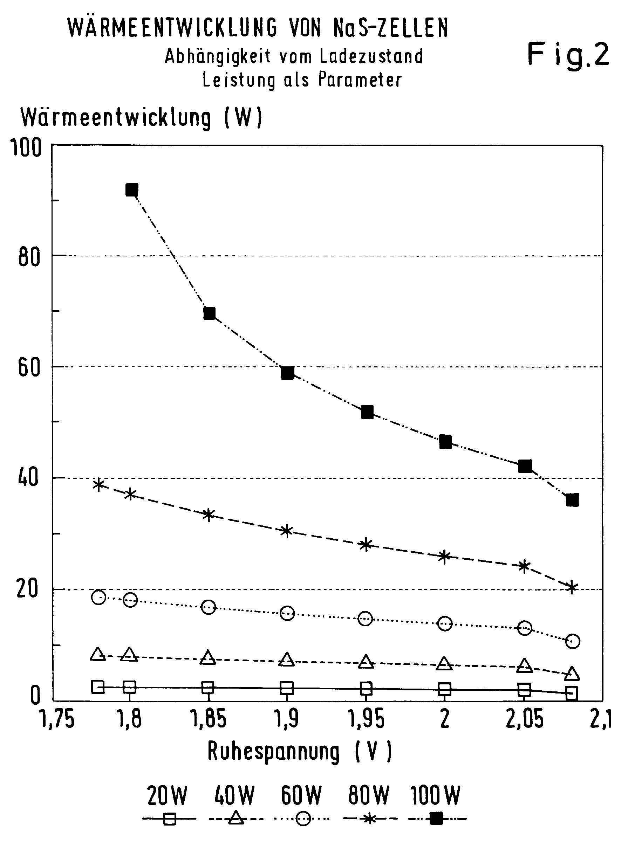

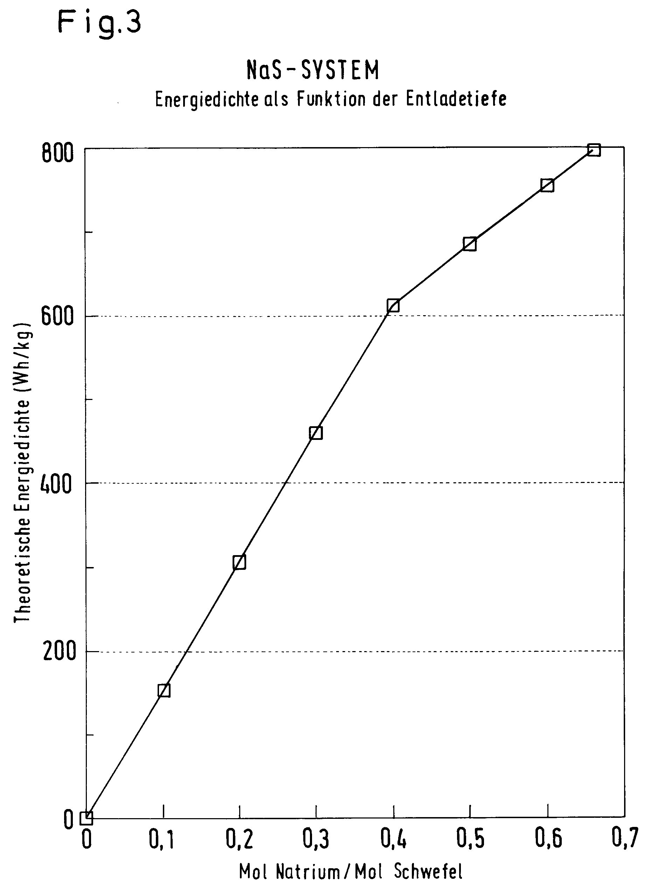

Da Natriumpolysulfide bei der Zusammenstzung Na₂S₄ ein absolutes Dichtemaximum besitzen, sind die Volumenverhältnisse recht günstig.
Für die Vollentladung der Speicherzelle muß im Kathodenraum ein Volumen von 100 cm³ zur Erzielung der obengenannten Nennkapazität zur Verfügung stehen. Das Volumen des Anodenraumes 4 muß einschließlich des Sicherheitseinsatzes 7 ebenfalls 100 cm³ betragen. Dies führt mit Zuschlägen für den Festelektrolyten, den Zellverschluß, das Gehäuse und die Anschlußfahnen zu einem Gesamtvolumen der Speicherzelle von etwa 300 cm³. In diesem Volumen werden 110 Wh gespeichert. Die erfindungsgemäße Speicherzelle 1 liefert am Ende der Nennentladung eine Spannung von 1,94 V bei einem Strom von 74 Ampere und einer Leistung von 100 W. Die Verlustleistung beträgt hierbei 44 W. Eine herkömmliche Speicherzelle, die auf eine Nennentladung bis Na₂S₃ ausgelegt ist, benötigt eine Schwefelelktrode mit einem Volumen von 86 cm^{3.} Da die anderen Volumenteile etwa gleich sind, ergibt sich für diese Speicherzelle ein Geasmtvolumen von 285 cm^{3.} Wegen der geringeren mittleren Spnnung speichert diese jedoch nur 107 Wh. Soll eine herkömmliche Speicherzelle am Ende der Entladung eine Leistung von 100 W liefern, beträgt die Verlustleistung 80 W bei einem Innenwiderstand von 8 mOhm. Der zugehörige Strom beträgt 100 A. Die erfindungsgemäße Speicherzelle 1 liefert, wie Figur 2 zeigt, am Ende der Entladung 1,94V, 74 A und weist eine Leistung von 100 W auf. Die Verlustleistung berägt 44 A. Figur 3 zeigt die Energiedichte der Speicherzelle 1 als Funktion der Endladetiefe. Der Vergleich einer herkömmlichen Speicherzelle mit einer Klemmenspannung von 1 V bei 100 W Leistung am Ende der Entladung mit der erfindungsgemäßen Speicherzelle mit einer Klemmenspannung von 1,3 V und analogen Bedingungen zeigt, daß eine uneingeschränkte Nutzung der Kapazität einer herkömmlichen Speicherzelle auch im Hinblick auf den Spannungsbereich, in dem die meisten Verbraucher arbeiten, nicht möglich ist.

## Patentansprüche

1. Elektrochemische Speicherzelle (1) auf der Basis von Natrium und Schwefel mit einem Anodenraum (4) und einem Kathodenraum (5), die durch einen alkaliionenleitenden Festelektrolyten (3) voneinander getrennt und wenigstens bereichsweise von einem metallischen Gehäuse (2) begrenzt sind, dadurch gekennzeichnet, daß das Mengenverhältnis von Schwefel zu Natrium in Abhängigkeit von der Nennkapazität so festgelegt ist, daß die Spannung am Ende der Nennentladung einen vorgebenen Wert und das bei der Entladung sich bildende Natriumpolysulfid eine definierte Zusammensetzung aufweisen.

2. Elektrochemische Speicherzelle nach Anspruch 1, dadurch gekennzeichnet, daß das Mengenverhältnis von Schwefel zu Natrium so festgelegt ist, daß die Molzahl von Schwefel zu Natrium größer als 3 : 2 ist.

3. Elektrochemische Speicherzelle nach einem der Ansprüche 1 oder 2, dadurch gekennzeichnet, daß das Mengenverhältnis Schwefel zu Natrium so festgelegt ist, daß die Spannung am Ende der Nennentladung 1.85 bis 2,02 V beträgt.

4. Elektrochemische Speicherzelle nach einem der Ansprüche 1 bis 3, dadurch gekennzeicht, daß das Mengenverhältnis von Schwefel zu Natrium so festgelegt ist, daß das sich bei der Entladung bildende Natriumpolysulfid am Ende der Nennentladung eine Zusammensetzung aufweist, die den Bereich zwischen Na₂S_{4,5} als auch Na₂ S_{3,5} umfaßt und die Grenzwerte einschließt.

5. Elektrochemische Speicherzelle nach einem der Ansprüche 1 bis 4, dadurch gekennzeichnet, daß die Menge des Natriums eine Tiefentladungsreserve aufweist, die so bemessen ist, daß im Fall eines Kurzschlusses die Bildung von Na₂Sₓ ausgeslossen ist, wobei x einen Wert kleiner/gleich 3,0 aufweist.

6. Verfahren nach einem der Ansprüche 1 bis 5, dadurch gekennzeichnet, daß die Menge des Natriums eine Zweitreserve aufweist, die so bemessen ist, daß grundsätzlich eine Benetzung des Festelektrolyten (3) mit Natrium auch bei einer Tiefentladung sichergestellt ist.

7. Elektrochemische Speicherzelle nach einem der Ansprüche 1 bis 6, dadurch gekennzeichnet, daß die Menge des Natriums eine Tiefentladungsreserve von mehr als 15% und gleich oder weniger 30% sowie eine Zweitreserve von 2,5% bis 10% umfaßt.
